# EUROPEAN PATENT SPECIFICATION

(11) **EP 0 876 749 B1**
(45) Date of publication and mention of the grant of the patent: **12.03.2003**
(21) Application number: 96928743.2
(22) Date of filing: 02.09.1996
(51) Int. Cl.: A01D 43/06

(54) **CONSTRUCTION OF CATCHER BOX**
GRASFANGSACK-STRUKTUR
STRUCTURE DE PANIER A HERBE

(30) Priority: 23.01.1996 JP 949596; 02.02.1996 JP 1771096; 09.02.1996 JP 2434796; 09.02.1996 JP 2434896; 09.02.1996 JP 2434996
(43) Date of publication of application: 11.11.1998
(73) Proprietor: YANMAR AGRICULTURAL EQUIPMENT CO., LTD., Osaka-fu 530-0013 (JP)
(72) Inventor: OYA, Terumitsu, Yanmar Agricultural Equip. Co. Ltd, Osaka-shi, Osaka 530 (JP); SUHARA, Yasuyuki, Yanmar Agricult. Equip. Co., Ltd, Osaka-shi, Osaka 530 0 (JP); FUJIMOTO, Kenichi, Yanmar Agricult. Equip. Co. Ltd, Osaka-shi, Osaka 50 (JP); HASHIMOTO, Yasuhiro, Yanmar Agric. Equip. Co., Ltd, Osaka-shi, Osaka 530 (JP)
(74) Representative: Henkel, Feiler, Hänzel
(86) International application number: JP9602486
(87) International publication number: WO97026785

(56) References cited:
- JP-A- 2 020 213
- JP-A- 4 183 313
- JP-A- 6 343 320
- JP-B- 3 032 963
- JP-U- 55 113 395
- JP-Y- 38 026 648
- US-A- 4 476 668
- US-A- 4 523 788

## Description

### Field of the Art of the Invention

The present invention relates to a construction of a lifting mechanism enabling a catcher box for collection of cut grass, which has been mowed by a mower attached to a venter portion of a vehicle body, to move vertically and a construction for detachably mounting the catcher box easily.

### Background Art

There is a well-known lawn mower provided with a mower attached to a venter portion of the vehicle body thereof, which is so constructed that grass cut by the mower is blown to a rear catcher box by a side thrower and when the catcher box is filled with the cut grass, it partly opens to release the grass.

The catcher box can easily release the cut grass to a low position, however it requires a lifting mechanism to release the grass to a bed of a truck or into an incinerator.

The general well-known lifting mechanism is so constructed that a rail frame is provided upright on the rear portion of the vehicle body, a hoist is disposed on an upper portion of the rail frame, and an end of wire spread from the hoist is fixed to the catcher box. According to winding up the wire, the catcher box can be moved upwardly along the rail frame.

There is also another well-known lifting mechanism using a hydraulic cylinder i.e. described in US 4,523,788 A, which rotates parallel links or is disposed along the rail frame, for the purpose of vertically moving a catcher box.

The lawn mower provided with the former lifting mechanism such as to move the catcher box upwardly by winding up the wire disposes the hoist provided with a heavy motor on the upper portion of the rail frame. Accordingly, it necessarily has a high center of gravity, whereby lacking stability. Also, a frame of the rail frame must be so long as to lift the catcher box high, whereby being extended upwardly. Thus, during travelling of the lawn mower, it is apprehended that the upper portion of the rail frame hits against a branch, a roof or so on, whereby badly travelling.

The lawn mower provided with the latter lifting mechanism such as to use the hydraulic cylinder for lifting the catcher box requires expensive oil piping. Also, in case of using the parallel links rotated by the hydraulic cylinder, the lifting mechanism becomes longitudinally long. In case that the hydraulic cylinder is vertically disposed, the hydraulic cylinder must be so long in correspondent with the level of the lifted catcher box because the lifting distance of the catcher box depends on the length of the hydraulic cylinder, whereby causing the center of gravity to move rearwardly, and the rear view thereof to be wrong.

In consideration of the above mentioned, it is desirable that the lifting mechanism for the catcher box avoids a hydraulic cylinder so as to be lowered, whereby causing the vehicle to travel steadily.

Furthermore, the conventional catcher box has a stay projecting forwardly so as to be fixed onto the rear end of the vehicle body through such a clamping member as a bolt, whereby being integral with the vehicle body.

Thus, when the large and heavy catcher box is attached or detached for production or maintenance of the catcher box, the attaching portion thereof or the rear portion of the vehicle, two operators are required. One operator supports the catcher box, and the other clamps or releases the clamping member. Accordingly, the catcher box is attached or detached by such a long and complicated work.

Thus, such a construction as to attach or detach the catcher box easily is desirable.

Furthermore, with regard to the construction by which the catcher box is vertically lifted directly, when the collected cut grass is released to such a bed of a truck or so, the rail frame must be disposed adjacently to a rear or side end of the bed, whereby having possibility of carelessly abutting against the bed. Moreover, the released cut grass is gathered on the environment of the bed, whereby requiring to be leveled.

For improving the efficiency of the lawn mowing work by the above mentioned lawn mower, it is desirable that the grass cutting work period is prolonged so as to prolong interval between the cut grass releasing periods. The easiest method for that is to expand the volume of the catcher box.

However, with regard to the construction by which the catcher box can be vertically moved so as to release the cut grass to a bed of a truck or the like, in consideration of weight balance, the catcher box cannot be expanded upwardly or rearwardly in shape.

Also, when the catcher box is so constructed as to be vertically moved, the coupling means between a rear end of a connecting hose, which connects the catcher box with a thrower attached to a mower, and a casting portion of the catcher box is made complicated. If the two portions are not coupled with each other smoothly, an operator must couple them, whereby complicating a cut grass releasing work.

Thus, it is desirable that the figure of the casting portion of the catcher box is improved, the cut grass content of the catcher box is expanded and the rear end of the connecting hose and the casting portion of the catch box can be coupled with each other without a human hand in case that the catcher box has been lifted.

### Summary of the Invention

The present invention provides a construction of a catcher box as defined in claim 1.

A main frame is provided upright on a rear portion of a vehicle body provided with a mower and a slide rail is vertically movably fitted on the main frame. A lifting frame fixing a catcher box is vertically movably fitted on the slide rail. Accordingly, an upright supporting member for guide of the vertical motion of the catcher box is divided into the main frame and the slide rail, whereby enabling the height of the catcher box to be disposed at a low position when the catcher box is lowered. A first wire is connected at one end thereof to an upper portion of the main frame and at the other end thereof to a hoist, which is provided on a lower portion of the main frame, through a pulley provided on the slide rail, so that the slide rail can be vertically moved by the hoist. A second wire is fixed at one end thereof to the main frame and is clamped at the other end thereof to the lifting frame through a pulley provided on an upper portion of the slide rail, so that the lifting frame is upwardly moved according to upward motion of the slide rail and the required power of the pulley for moving the lifting frame upwardly can be reduced.

The cut grass can be released out while the catcher box is moved upwardly. A motor of the hoist is disposed below the rear portion of the vehicle body frame, whereby lowering the center of gravity and allowing rear view. Furthermore, the motor is disposed between left and right rear wheels and before rear ends of the rear wheels when viewed in side, whereby being prevented from hitting against obstacles.

For the purpose of detachably attaching a working machine to the lifting frame provided on the vehicle body easily, the slide rail is provided on its lower portion with an engaging shaft and on its upper portion with a metal lock member and the support frame of the working machine is provided on its lower portion with an anchoring channel for engagement with the engaging shaft and on its upper portion with an anchoring shaft for engagement with the metal lock member. According to such a construction, for example, by operating of upwardly rotating the catcher box with the engaging shaft of the lifting frame inserted in the anchoring channel, it rotates around the engaging shaft and the anchoring shaft engages with the metal lock member, whereby enabling the catcher box to be fixed. In unlocking operation, rearwardly rotating the catcher box around the engaging shaft and taking out the engaging shaft from the anchoring channel allows the catcher box to be detached.

Furthermore, in such a construction that the catcher box can be vertically moved by means that the main frame provided upright on the rear portion of the vehicle body, the the slide rail vertically movably fitted on the main frame and the lifting frame, to which the catcher box is attached, vertically movably fitted on the slide rail are respectively connected to one another by wires and one of the wires is connected at its one end to a lifting mechanism provided on the main frame, the main frame is provided at its upper portion with an elastic member for biasing the slide rail forwardly and an upper guide roller for guiding the rearwardly movable slide rail. According to this, while the catcher box is moved upwardly, the slide rail slants rearwardly and the catcher box moves rearwardly in proportion to its upward motion. When reaching the top level of its vertical motion, the catcher box can be opened away from the vehicle body, so that it can release the cut grass in close vicinity to a center of a bed of a track or the like.

The upper guide roller is pivotally provided on an arm, which interlocks with a lever for opening and closing the catcher box, pivoted to the main frame, so that the catcher box opens simultaneously with reaching the top level of its vertical motion. Accordingly, the cut grass can be released from the catcher box, which automatically opens without operation of the lever for opening and closing the catcher box but only by operating the catcher box to move upwardly.

The vehicle body of the lawn mower is provided on its rear portion with the vertically movable catcher box and at its venter portion with the mower. A thrower is disposed on one side of the mower and a connecting hose is interposed between the thrower and the catcher box. The rear end portion of the connecting hose is open upwardly so as to be detachably attached to the catcher box. The catcher box is expanded forwardly at its upper front portion so as to constitute a casting portion. An inserting hole for insertion of the connecting hose is bored in the lower surface of the casting portion. The volume of content of the catcher box can be increased by such an expanded portion as the casting portion. The portion of the connecting hose for insertion thereof and the casting hole to the interior of the catcher box are disposed vertically to each other, so that they can be attached or detached to or from each other smoothly even the catcher box is vertically moved. Accordingly, the grass, which has been mowed by the mower, is blown to the catcher box provided on the rear portion of the vehicle body through the connecting hose by means of the thrower and is collected in the catcher box. The cut grass collected in the catcher box can he released from the releasing opening thereof without falling from the casting hole thereof when the catcher box is moved upwardly.

### Brief Description of the Drawings

Fig. 1 is a side view of a lawn mower including a mower attached to the venter portion thereof and a catcher box attached to the rear portion thereof;
Fig. 2 is a side view partly in section showing a lifting mechanism of the catcher box;
Fig. 3 is a rear view partly in section of the same;
Fig. 4 is a partial side view partly in section of the same;
Fig. 5 is a partial bottom view partly in section of the same;
Fig. 6 is a bottom view of a portion where a motor is disposed;
Fig. 7 is a side view showing the catcher box which has been lifted;
Fig. 8 is a side view partly in section showing an attaching mechanism of the catcher box;
Fig. 9 is a rear view partly in section of the same;
Fig. 10 is a side view of the same;
Fig. 11 is a side view showing the lifting mechanism to which a fork lift is attached;
Fig. 12 is a side view showing the lifted catcher box which is slanted rearwardly;
Fig. 13 is a side view partly in section showing the lifting mechanism of the catcher box which can be slanted rearwardly;
Fig. 14 is a rear view partly in section of the same;
Fig. 15 is a partial plan view showing a slanting support portion of the lifting mechanism;
Fig. 16 is a side view of the same;
Fig. 17 is a partial plan view showing another slanting support portion of the lifting mechanisn, and
Fig. 18 is a side view partly in section of the catcher box.

### The Best Mode of Embodiment of the Invention

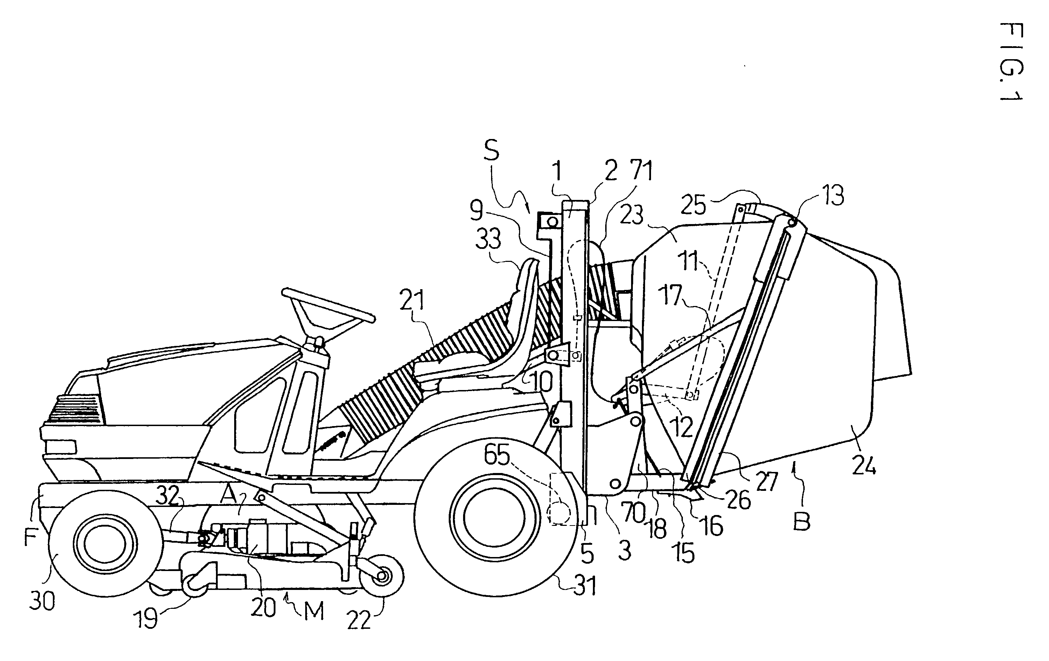

An entire construction of a lawn mower provided with a mower M and a catcher box B will be explained according to Fig. 1. The mower M is suspended from a venter portion of a tractor as a vehicle body between front wheels 30 and rear wheels 31 thereof by a lifting mechanism, so that it can be vertically moved by operation of an operator sitting on a seat 33.

The mower M is supported at a front portion thereof by front support wheels 19 and at a rear portion thereof by rear guide wheels 22, so as to be enabled to adjust the level of mowing the lawn. When the lawn mower travels in state that the mower M is lowered, the mower M can advance along the field surface so as to mow the lawn.

An engine is mounted on a front portion of a vehicle body frame F and is disposed in a bonnet. The power output from the engine is transmitted to the front wheels 30 and the rear wheels 31 through a transmission (not shown).

The power is also transmitted from a front axle casing to a gearbox 20 of the mower M through a universal joint 32. The gearbox 20 transmits the power so as to drive rotary blades and a thrower A. The thrower A is disposed on right side of the seat 33. The cut grass which has been mowed by the mower M is cast into the thrower A and is blown to the catcher box B through a connecting hose (a shooter) 21 by rotation of a fan of the thrower A.

The catcher box B is box-like shaped and can be divided into halves along a diagonal thereof when viewed in side. The front half thereof is a front box 23, and the rear half thereof is a rear box 24. The surroundings of the joint portions of the front and rear boxes 23 and 24 are reinforced by reinforce frames 26 and 27 respectively.

Upper portions of the reinforce frames 26 and 27 are pivoted around a pivotal shaft 13. A rotary arm 25 is fixed onto an upper end of the reinforce frame 27 and projects forwardly so that a front end thereof is connected with an opening and closing lever 10 through a link 11, an arm 12 and an interlocking wire 71. The opening and closing lever 10 is disposed at right side of the operator sitting on the seat 33 and is fixed onto a pivotal shaft pivoted onto one of main frames 1.

The arm 12 is connected to a metal lock member 16 through a link 15. When the opening and closing lever 10 is rotated upwardly, the metal lock member 16 rotates downwardly so as to unlock. Accordingly, the rotary arm 25 is rotated through the linkage so that the lower portion of the rear box 24 is rotated rearwardly. Thus, the catcher box B is opened so as to release the cut grass contained therein.

The catcher box B is fixed through left and right stays 18 and a reinforce stay 17 to a lifting mechanism S provided on a rear end portion of the vehicle body frame F behind the seat 33. To be detailed, rear ends of support stays 18 are fixed to a lower end portion of the reinforce frame 26 of the front box 23 and rear ends of the reinforce stay 17 are fixed to vertically middle portions of the front box 23. The reinforce stay 17 is connected with the support stays 18 through left and right support frames 70 for reinforcement. The catcher box B can be vertically moved by the lifting mechanism S.

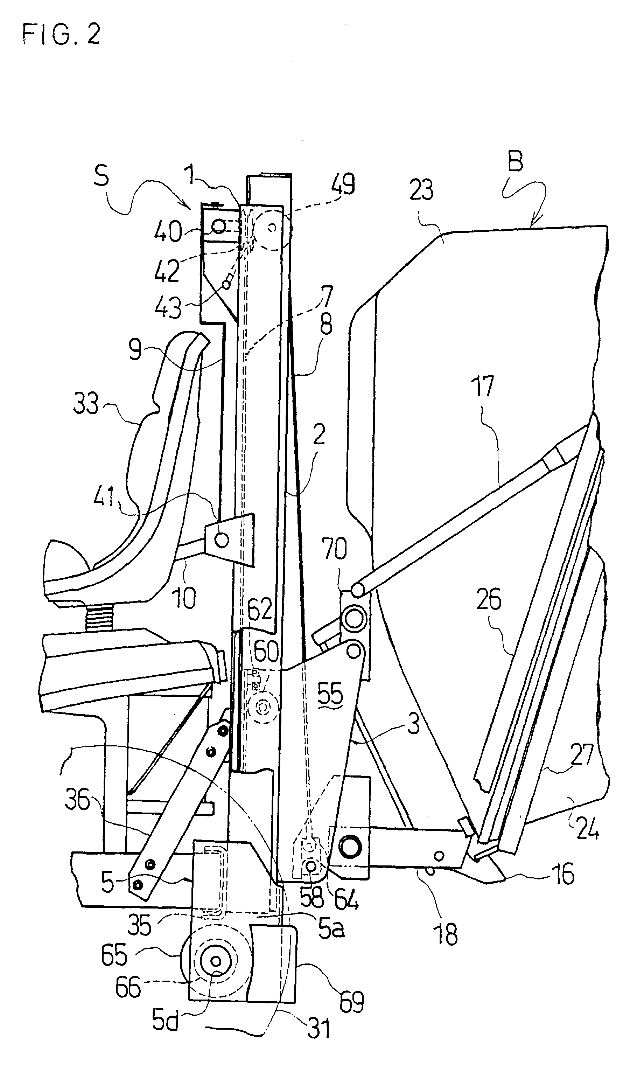

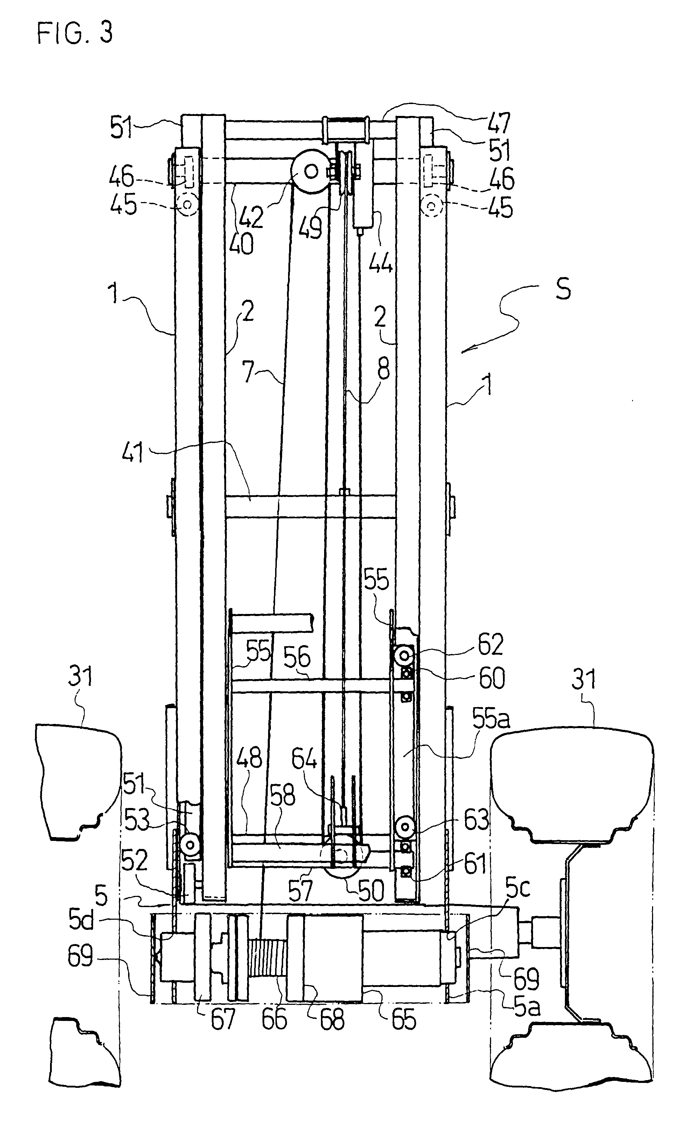

As shown in Figs. 2 and 3, the lifting mechanism S comprises a pair of main frames 1 provided upright on the rear portion of the vehicle body frame F, a pair of slide rails 2 respectively fitted onto inner sides of the main frames 1, a lifting frame 3 vertically movable along the slide rails 2 and a motor 65 driving for winding a first wire 7. Fixing the catcher box B onto a rear portion of the lifting frame 3 enables vertically moving the catcher box B.

Lower portions of main frames 1 are fixed to the rear end portion of the vehicle body frame F through a receiving base 35 and are reinforced respectively by stays 36. The pair of left and right main frames 1, which are U-like shaped in section, are disposed upright so as to face their opening sides to each other. Upper ends of main frames 1 is substantially positioned at the same level with the upper end of the lowered catcher box B.

Between vertically middle portions of front surfaces of the main frames 1 are spanned a middle joint frame 41 and between the upper end portions thereof are spanned an upper joint frame 40, so as to join the main frames 1 together. On a laterally middle portion of a rear surface of the upper joint frame 40 is pivotally provided a fixed pulley 42 having a longitudinal axis and at the right side thereof is disposed a clamp portion 44 clamping one end of the first wire 7.

In front of the upper joint frame 40 is disposed a clamp portion 43 clamping one end of a second wire 8. In an inner space of each main frame 1 between the front and rear surfaces of its upper portion is pivotally provided a longitudinally axial guide roller 45 and a laterally axial guide roller 46 so as to hold each of the slide rails 2 in vertically motion.

Each of the pair of left and right slide rails 2 is disposed along an inner side of each of the main frames 1. The slide rail 2 is substantially as long as the main frame 1. The slide rails 2 are joined together by an upper joint frame 47 spanned between their upper end portions and a lower joint frame 48 spanned between their lower end portions. On a laterally rightward middle portion is pivotally provided a pulley 49 having a lateral axis and on a substantially laterally middle portion of a front surface of the lower joint frame 48 is pivotally provided a pulley 50.

A pair of guide plates 51 are fixed respectively onto front surfaces of the slide rails 2. Each of the guide plates 51 projects laterally and outwardly and is inserted into the inner space of each of the main frames 1.

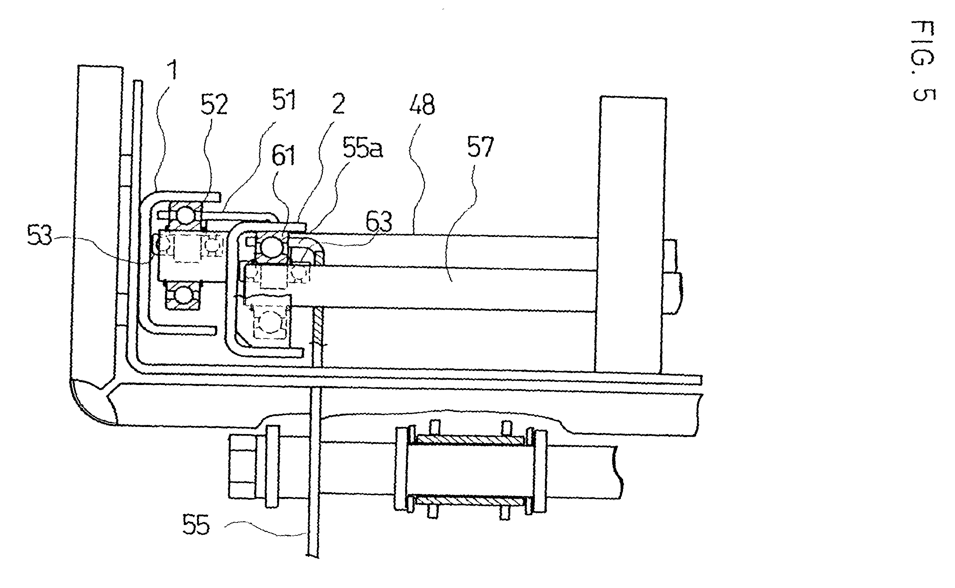

As shown in Figs. 3, 4 and 5, a pair of support wheels 52 are pivotally provided respectively onto lower portions of side surfaces of slide rails 2, and a pair of support wheels 53 are pivotally provided respectively onto the guide plates 51. The support wheels 52 and 53 slidably abut respectively against inner surfaces of the main frames 1. The guide rollers 45 slidably abut respectively against outer surfaces of the slide rails 2 and the guide rollers 46 slidably abut against outer surfaces of the guide plates 51, so as to guide the slide rails 2 in vertical motion.

Between the slide rails 2 is vertically slidably disposed the lifting frame 3 fixing the catcher box thereon. The lifting frame 3 comprises a pair of plate members 55 and joint shafts 56, 57 and 58. The joint shafts 56, 57 and 58 are fixed respectively to upper and lower front portions and a lower rear portion of each of the plate members 55., so that left and right plate members 55 are disposed in parallel with each other.

The joint shaft 56 and the joint shaft 57, which join the front portions of the plate members 55 with each other, project laterally from the plate members 55 so that the both end portions thereof pivot respectively by a pair of support wheels 60 and a pair of support wheels 61.

The support wheels 60 slidably abut respectively against rear inner surfaces of the slide rails 2 and the support wheels 61 slidably abut respectively against front inner surfaces of the slide rails 2. Onto upper and lower portions of bending portions 55a of the pair of plate members 55 are pivotally provided a pair of support wheels 62 and a pair of support wheels 63, which slidably abut respectively against side inner surfaces of the slide rails 2 for guide of the vertical motion of the lifting frame.

At a substantially laterally middle portion of the joint shaft 58 spanned between the lower rear portions of the plate members 55 is disposed a clamp portion 64, which clamps the second wire 8 for lifting the lifting frame 3. To the rear portions of plate members 55 are respectively fixed the support stays 18, which support the lower portion of the catcher box B, and the support frames 70, whereby enabling the catcher box B together with the lifting frame 3 to move vertically.

A motor casing 5 is fixed onto the lower rear end portion of the vehicle body frame F. A reel drum 66 is laterally axially disposed within the motor casing 5 and is driven by the motor 65 so as to construct a hoist.

The first wire 7 is wound round the reel drum 66 fixing one end thereof, is hung on the fixed pulley 42 on the upper joint frame 40 between the main frames 1 and is clamped at the other end thereof by the clamp portion 44 on the upper joint frame 40, and the pulley 50 on the lower joint frame 48 between slide rails 2 is hung on an intermediate portion of the first wire 7 between the fixed pulley 42 and the clamp portion 44, whereby suspending the slide rails 2.

The second wire 8 is clamped at one end thereof by the clamp portion 43 on the upper joint frame 40, is hung on the pulley 49 on the upper joint frame 47 between the slide rails 2 and is clamped at the other end thereof by the clamp portion 64, whereby suspending the lifting frame 3.

Accordingly, when the first wire 7 is wound up by driving the motor 65, the pulley 50 as a movable pulley is moved upwardly together with the slide rails 2 supporting the pulley 50, because the other end of the first wire 7 is fixed to the upper portion between the main frames 1.

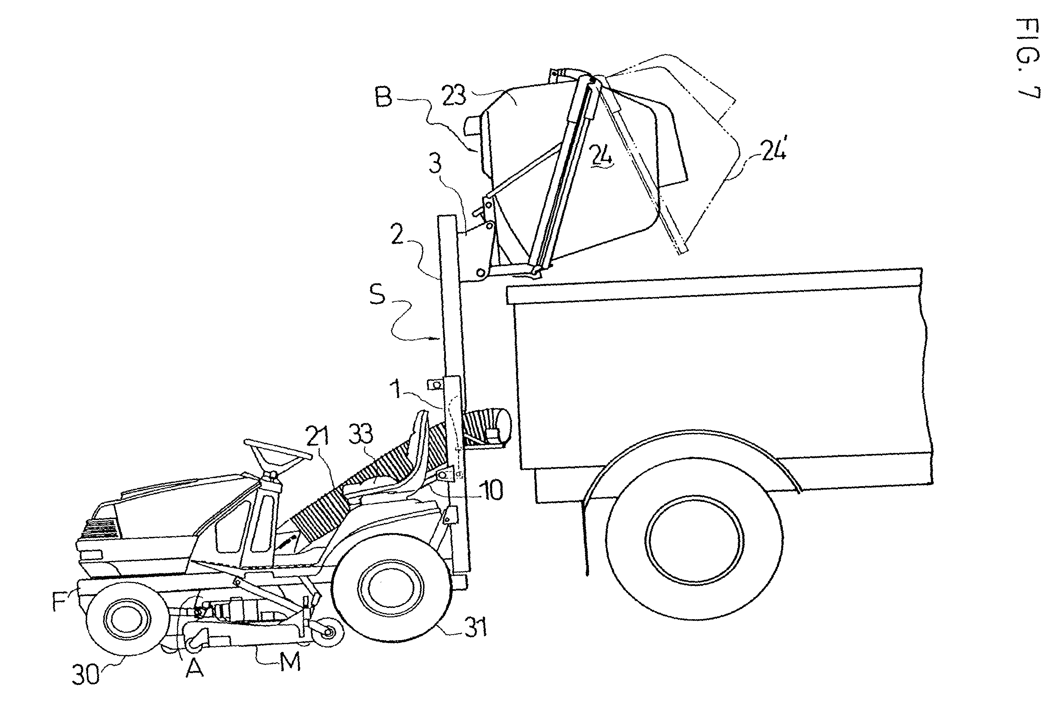

The pulley 49, on which an intermediate portion of the second wire 8 is hung, is moved upwardly according to the upward slidable motion of the slide rails 2, so that the lifting frame 3 is moved upwardly because one end of the second wire 8 is fixed to the upper portion between the main frames 1 and the other end thereof is fixed to the lifting frame 3. Simultaneously, the catcher box B fixed onto the lifting frame 3 is also moved upwardly as shown in Fig. 7.

Thus, the slide rails 2 are lifted upwardly from the main frames 1 provided upright on the rear portion of the vehicle body and the catcher box B is lifted through the lifting frame 3 to the upper portion between the slide rails 2, so that the catcher box B can be lifted to such a high position.

When the catcher box B is lifted to the predetermined level, the rear box 24 thereof is opened so as to release the cut grass therein.

As the above mentioned, the pulley 50 as a movable pulley is disposed on the lower joint frame 48 joining the lower ends of the vertically movable slide rails 2 together. It will be also noted that a clamp portion may be disposed at a laterally middle portion of the lower joint frame 48 so as to clamp one end of the first wire 7 hung on the fixed pulley 42 pivotally provided onto the upper joint frame 40 between the main frames 1, whereby vertically moving the slide rails 2. This construction can increase the speed of the vertically motion of the catcher box B. The slide rails 2 can be also excepted.

According to the above mentioned, when lowered, the slide rails 2, which are vertically movably provided on the main frames 1, can be housed within the main frames 1, so as to prevent the lifting frame 3 from projecting high above the vehicle body. Thus, a lawn mower whose layout is entirely lowered can be obtained. It can travel among trees having low branches.

A hoist for vertical motion of the catcher box B is provided at the lower portion of the vehicle body without a hydraulic cylinder, so that even if the vehicle body is small typed which has no oil piping for providing an oil taking-off portion, it requires no improvement, whereby simplifying the lifting mechanism S attached to the catcher box B.

Furthermore, two wires, the second wire 8 for the vertical motion of the catcher box B and the first wire 7 for the vertical motion of the slide rails 2, are provided, so that the catcher box B can be lifted high and the support mechanism for lifting it can be compact and can be low-positioned. whereby stabilizing the balance of travelling when lawn mowing.

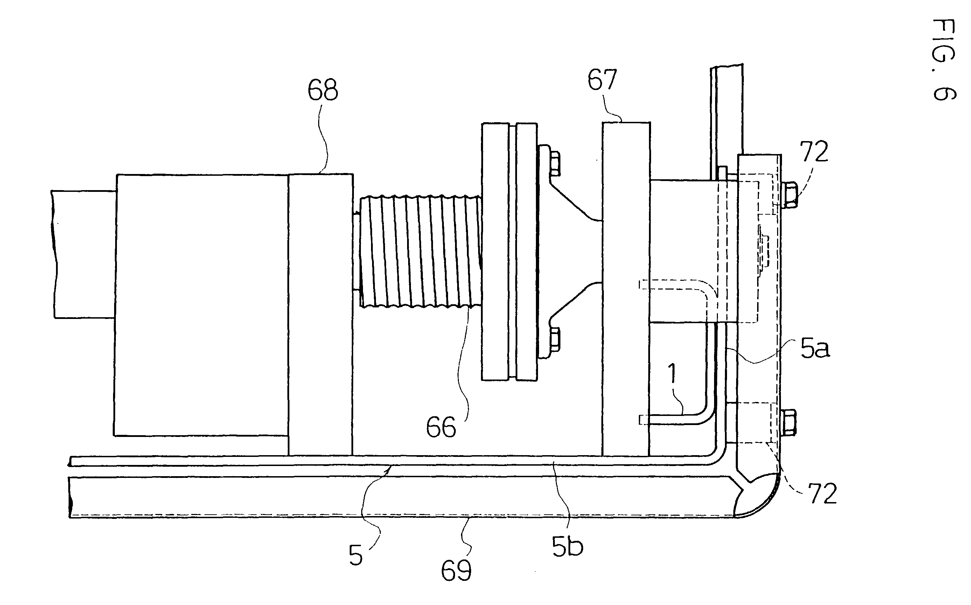

Next, explanation will be given on the attachment of the motor 65 for vertically moving the catcher box B according to Fig. 6. A motor casing 5 consisting of a pair of side plates 5a and a rear plate 5b is disposed below the lower ends of main frames 1 so as to cover the lower rear portions thereof. A drum support member 67 and a center support member 68 project forwardly from a left portion of a front surface of the rear plate 5b.

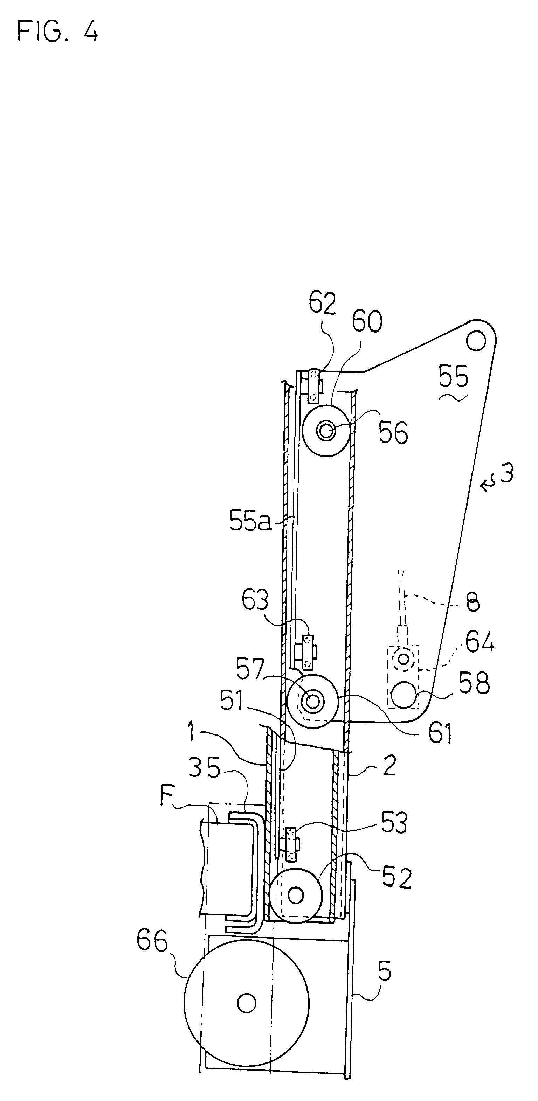

As shown in Figs. 3 and 4, the left and right side plates 5a, which are formed as both forwardly bending left and right side portions of the motor casing 5, is fixed respectively onto the side surfaces of the main frames 1. Front portions of the side plates 5a is bored respectively by through holes 5c and 5d. The motor 65 is passed through the through hole 5c and is fixed onto the center support member 68. The reel drum 66 is rotatably supported by means of the through hole 5d and the drum support member 67.

Accordingly, the reel drum 66 and the motor 65 are disposed between the rear wheels 31 and when viewed in side, they are laid below the rear portion of the vehicle body frame F and are disposed before the rear end surfaces of the main frames 1 and rear ends of the rear wheels 31.

As shown in Fig. 6, a pair of fixing portions 72 project laterally from the side plates 5a respectively. A cover 69 of the motor casing 5 is screwed to the fixing portions 72, so as to cover the rear and sides of the motor 65 and the reel drum 66. Thus, the rear of the motor 65 is doubly protected by the rear plate 5b of the motor casing 5 and the cover 69.

When the catcher box B is lifted above a bed of a truck for releasing the cut grass therein and the vehicle is backed, even if an obstacle is on the field, it hits against the rear wheels 31 and the main frames 1 before hitting against the motor 65, and moreover, the motor 65 can be prevented from directly hitting against such an obstacle by disposal of the cover 69 and the motor casing 5.

Furthermore, as shown in Fig. 2, a partition member 9 made of rubber, cloth, a synthetic resins plate, a metal plate or the like hangs down from the front portion of the upper joint frame 40 between the main frames 1 and is fixed at an lower end thereof onto the front surface of the middle joint frame 41.

Thus, the partition member 9 disposed between the left and right main frames 1 separates the seat 33 from the lifting mechanism S, so that when the cut grass is released from the lifted catcher box B, it can prevent the operator sitting on the seat 33 from being exposed to the released cut grass blown by the wind, whereby keeping good environment during the releasing work. Also, the partition 9 can prevent the operator from approaching the lifting mechanism S by mistake.

It will be also noted that the partition 9 is preferably made of a transparent plate or a net, so as to enable the operator viewing rearward. In case of using the partitition's 9 given hardness, it can also reinforce the main frames 1.

As the above mentioned, the motor 65 is disposed between left and right rear wheels 31 and before the rear ends thereof, so that if there is an obstacle behind the vehicle when the vehicle is backed, the rear wheels 31 hits against the obstacle before the motor 65 hits against it, whereby protecting the motor 65 without damage.

The motor 65 is disposed below the vehicle body frame F as compared with the conventional disposal of a motor above rails guiding the vertical motion of the catcher box, so that the center of gravity of the vehicle body can be lowered, whereby keeping the balance of weight thereof steady. Thus, the vehicle can travel steadily and the space above the seat 33 can be expanded.

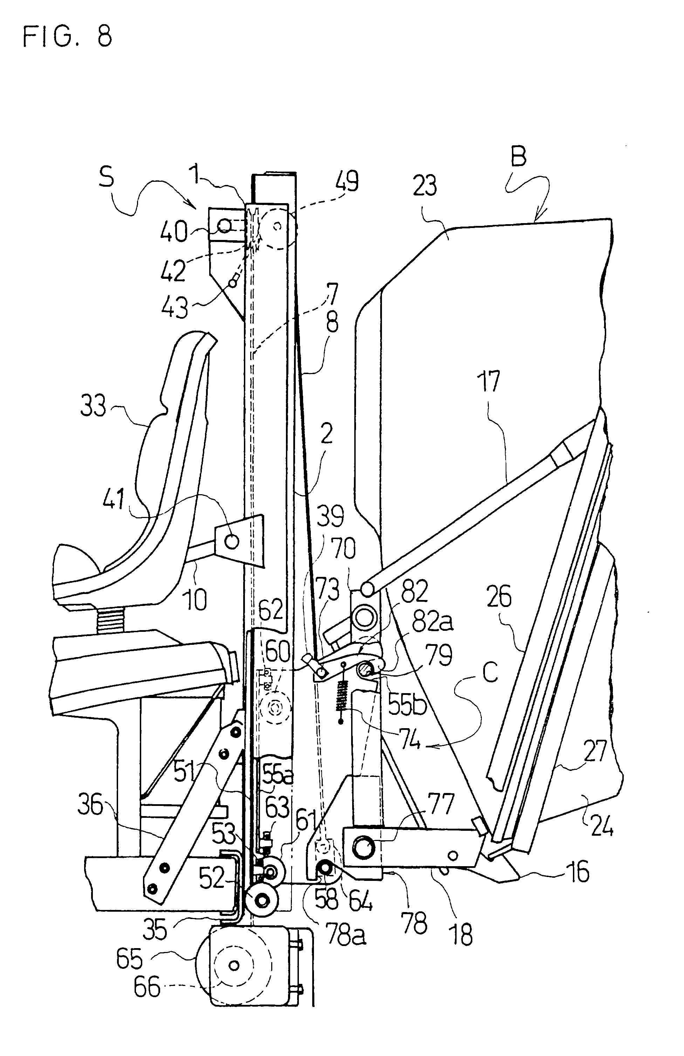

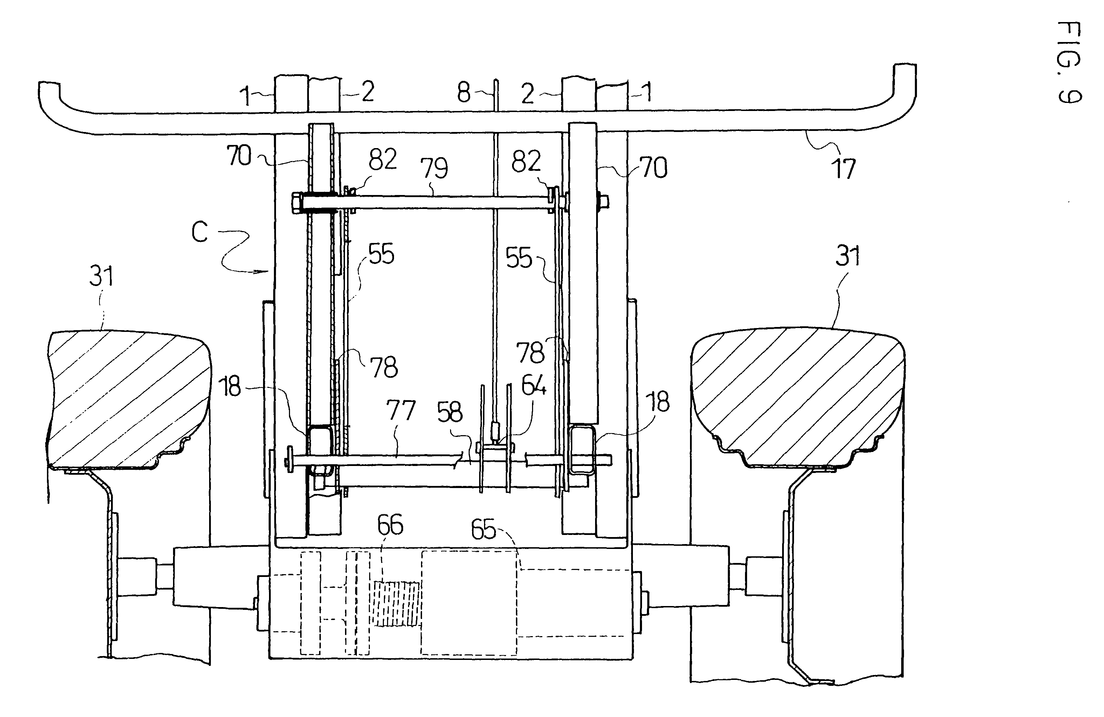

Next, explanation will be given on an attaching mechanism C enabling the catcher box B attached quickly according to Figs. 8, 9 and 10. The attaching mechanism for the catcher box B comprises attaching plates 78 and an anchoring shaft 79 provided to the catcher box B and a connecting shaft 58 and metal lock members 82 provided to the lifting frame 3 of the vehicle body. In this case, the connecting shaft 58 provided to the lifting frame 3 is used as an engaging shaft.

With regard to the catcher box B, the left and right support stays 18 and the reinforce stay 17 are fixed at their rear portions to the reinforce frame 26 of the front box 23, and are fixed at their front portions to the left and right support frames 70. The attaching plates 78 are fixed respectively onto the portions of the support frames 70 in front of the support stays 18. A lateral shaft 77 is spanned between the attaching plates 78.

Each of the attaching plates 78 is a substantially trapezoid plate when viewed in side and has an anchoring channel 78a formed at its lower front portion. It will be also noted that the attaching plate 78 may be formed integrally by the support frame 70. The anchoring shaft (pin) 79 is spanned between upper portions of the support frames 70.

The left and right plate members 55 constituting the lifting frame 3 has anchoring channels 55b formed at their upper rear portions for engagement with the anchoring shaft 79. A pivotal shaft 73 is rotatably supported between the portions of the plate members 55 in front of the anchoring channels 55b. The metal lock members 82 and a releasing arm 39 are fixed onto the pivotal shaft 73, whereby enabling them to rotate with centering the pivotal shaft 73.

Each of the metal lock members 82 forms a hook portion 82a at its rear portion, so as to engage with the anchoring shaft 79 for locking. A spring 74 is interposed between an intermediate of each of the metal lock members 82 and each of the plate members 55, so as to bias the metal lock member 82 in downward rotation for keeping it locked.

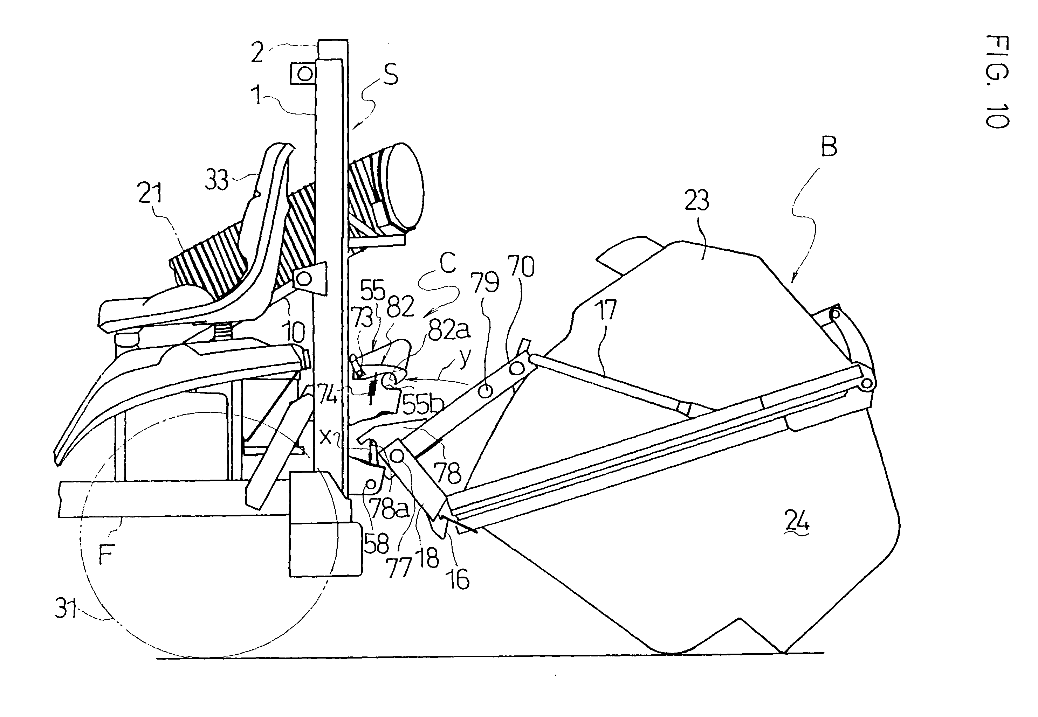

According to such a construction, for the purpose of attachment of the catcher box B, the rear box 24 is disposed downwardly and the anchoring channel 78a of the attaching plate 78 is disposed right above the connecting shaft 58 (as an engaging shaft) of the lifting frame 3 of the vehicle body as shown in Fig. 10. In such a state, when the rear box 24 is manually lifted upwardly as it is, the catcher box B is rotated forwardly (in the direction of an arrow x) and the anchoring channels 78a engage with the connecting shaft 58. Furthermore lifting the rear box 24, the catcher box B can be rotated in the direction of an arrow y around the connecting shaft 58 engaging with the anchoring channels 78a.

When the catcher box B is lifted to the predetermined level, the anchoring shaft 79 is inserted into the anchoring channels 55b formed by the plate members 55 of the lifting frame 3 and lifts the hook portions 82a of the locking medals 82 against the biasing of the springs 74. The hook portions 82a engage with the engaging shaft 69, whereby being locked. Accordingly, the catcher box B can be fixed steadily only by operation of lifting it.

To the contrary, for the purpose of detachment of the catcher box B, when the releasing arm 39 is rotated forwardly just in the state that the catcher box B is pressed forwardly, the hook portions 82a of the metal lock members 82 disengage from the engaging shaft 69. Then, by operation of rotating the catcher box B rearwardly, the rear box 24 abuts against the ground surface, and by further rotation of the catcher box B rearwardly, the anchoring channels 78a also disengage from the connecting shaft 58 in contrast with the above mentioned, so that the catcher box B can be detached.

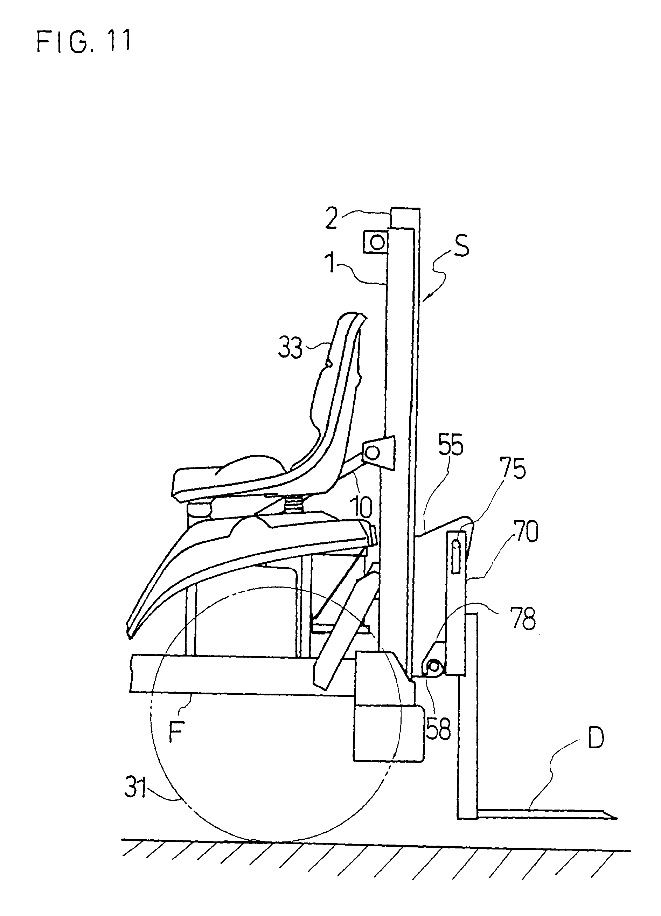

As shown in Fig. 11, a fork D instead of the catcher box B is attached by use of the attaching mechanism C, whereby enabling the vehicle used as a fork lift. With regard to this, front vertical frames of the fork D are fixed respectively onto the support frames 70 and the attaching plates 78, so that they can be attached to the lifting frame 3 similarly with the above mentioned. The vehicle can be also used for other purposes by attachment of other units like a bucket, a base or so on.

Furthermore, in the construction of the attaching mechanism C for the catcher box B, lock pins 75 shown in Fig. 11 can be used instead of the metal lock members 82.

In case of using the lock pins 75, the plate members 55 of the lifting frame 3 and the support frames 70 are provided respectively with holes having the common axes when viewed in side. The lock pins 75 can be inserted into these holes by simple laterally inward inserting operation, so that the catcher box B, the fork D or another unit can be attached to the vehicle body easily.

As the above mentioned, only by operation of disposing the support frames 70 above the connecting shaft 58 and manually lifting the rear portion of the catcher box B, the connecting shaft 58 engages with the anchoring channels 78a of the attaching plates 78, so as to be a pivotal shaft. And by the further manual lifting operation of the catcher box B, the metal lock members 82 engage with the anchoring shaft 79, whereby being locked, so that the catcher box B can be fixed to the vehicle body steadily.

Thus, the catcher box B can be fixedly attached to the vehicle body without bolt or the like, so that a single operator can lift it manually without an assistant operator, whereby saving the time and the number of the operators for attachment thereof and enabling the maintenance thereof efficiently.

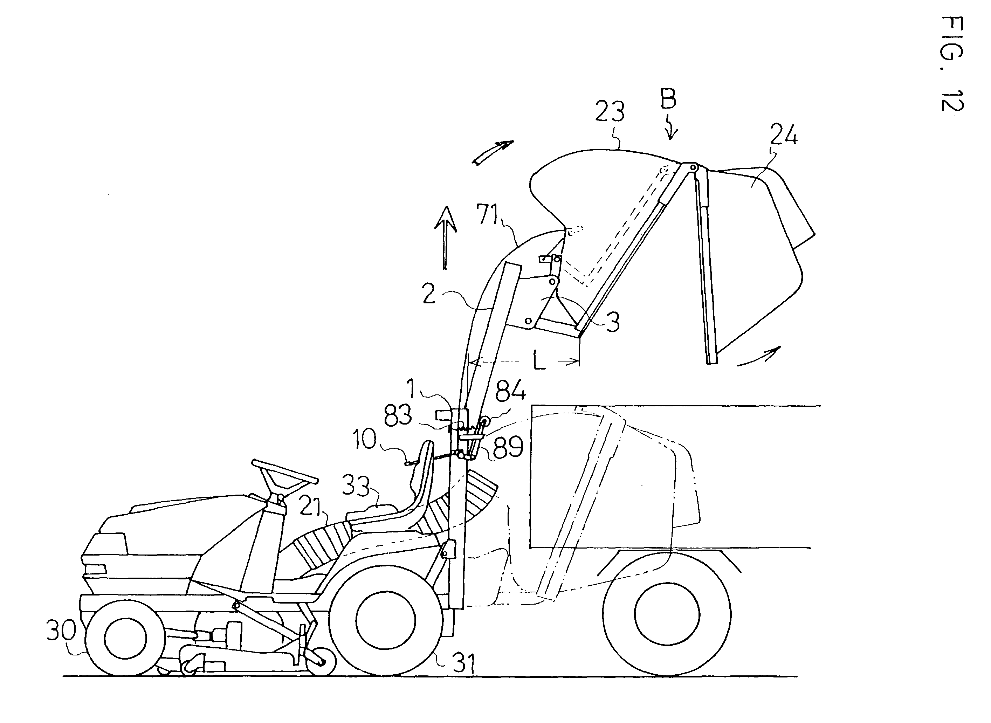

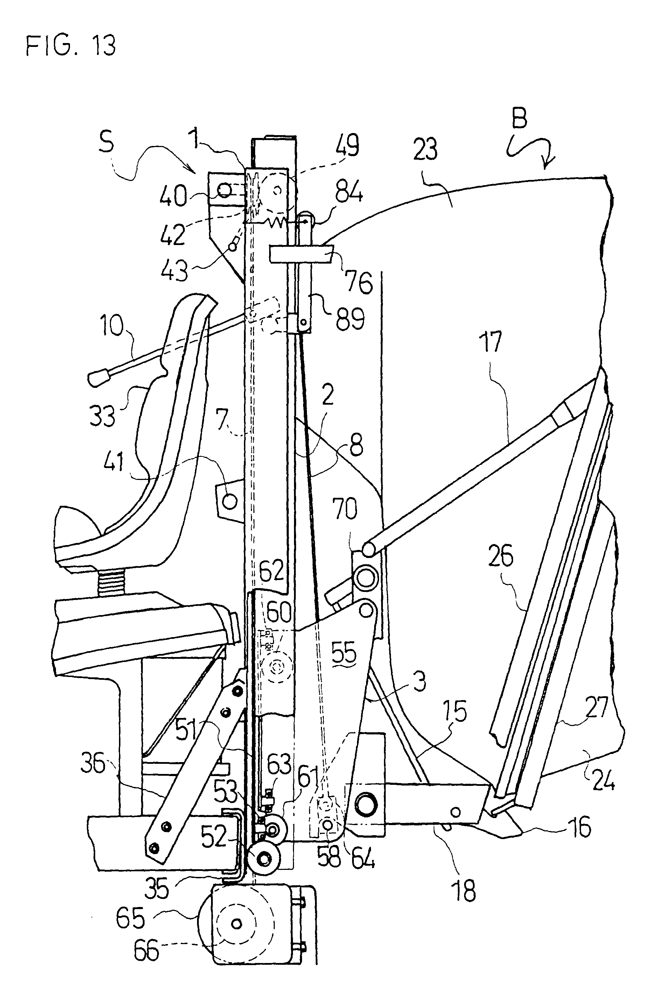

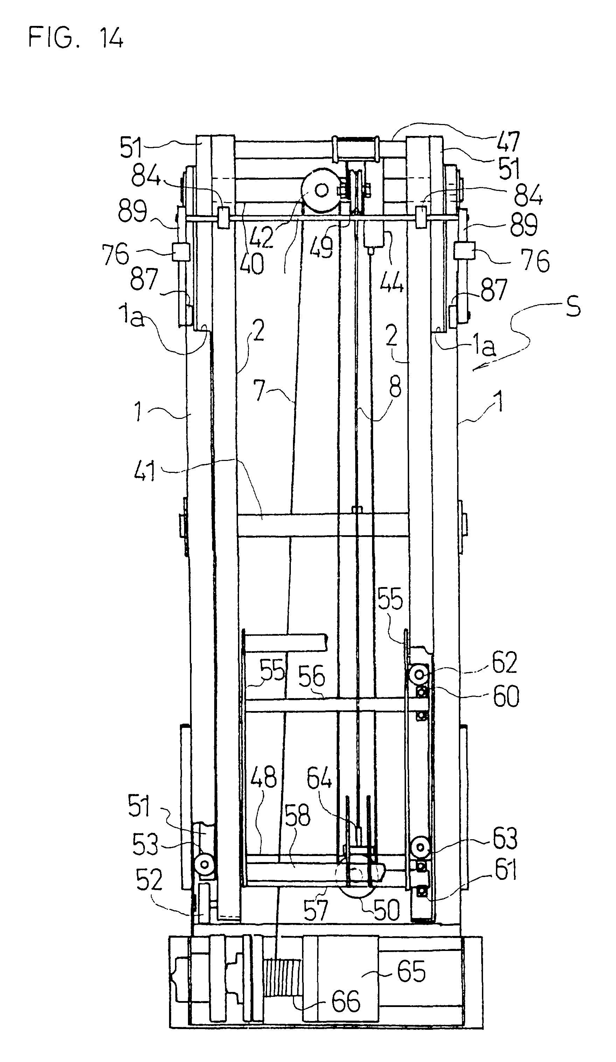

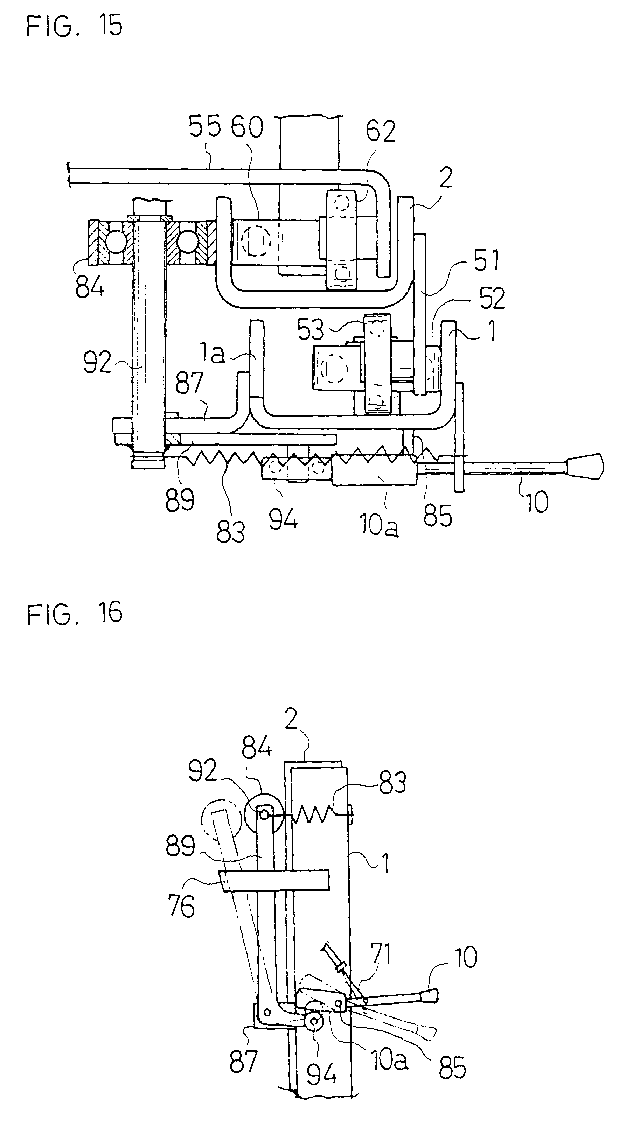

Next, explanation will be given on the lifting mechanism enabling the catcher box B to open for releasing the cut grass therein simultaneously with being slanted rearwardly at the top level of lifting range thereof in accordance with Figs. 12 to 16.

The support wheels 52 having lateral axes are pivotally provided respectively on outer surfaces of the lower portions of the pair of the slide rails 2 and slidably abut respectively against the front inner surfaces of the main frames 1 so as to guide the slide rails 2 in longitudinal direction when they are vertically moved.

Also, the pair of the guide plates 51 are fixed respectively onto the front surfaces of the slide rails 2 and project outwardly so as to enter the inner spaces of the main frames 1 respectively. The pair of the support wheels 53 are pivotally provided respectively on the guide plates 51 and slidably abut respectively against the side inner surfaces of the main frames 1 so as to guide the slide rails 2 in lateral direction while they are vertically moved.

The pair of main frames 1 are provided at upper portions of the rear surfaces thereof respectively with notches 1a. Support stays 87 are fixed onto the rear surfaces of the main frames 1 and lower portions of arms 89 are pivotally provided respectively onto the support stays 87. A support shaft 92 is spanned between upper ends of the arms 89. A pair of upper guide rollers 84 are rotatably supported onto the support shaft 92. Springs 83 are interposed between the support shaft 92 and the main frames 1. The upper guide rollers 84 are disposed so as to abut respectively against the rear surfaces of the slide rails 2 and the springs 83 bias the slide rails 2 forwardly.

One of the arms 89 is substantially L-like shaped. A roller 94 is pivoted onto an utmost end thereof and is disposed so as to abut against a cam 10a provided on an end of the opening and closing lever 10.

The opening and closing lever 10 is disposed on right of the operator sitting on the seat 33 and are pivoted onto a side surface of one of the main frames 1 through the pivotal shaft 85. One end of the interlocking wire 71 for opening and closing the catcher box B is joined with the opening and closing lever 10. The arms 89 cannot rotate further than the predetermined rotational angle by stoppers 76 respectively.

According to the above mentioned construction, when it is necessary to open the catcher box B, which has been lowered or intermediately lifted, the opening and closing lever 10 is manually rotated downwardly so as to pull the interlocking wire 71, whereby enabling the catcher box B to open. In other words, the catcher box B can release its content at any level.

Then, when the first wire 7 is wound up by driving of the motor 65, the slide rails 2 and the lifting frame 3 are moved upwardly in such a condition that the lower ends of the slide rails 2 abut respectively against the front inner surfaces of the main frames 1 through the support wheels 52 and the rear surfaces of the lower portions thereof abut respectively against the upper guide rollers 84. Thus, as shown in Fig. 12, the slide rails 2 are slanted rearwardly in the vicinity of the top level of their vertical motion by the weight of the catcher box B and against the biasing of the springs 83. At the top level thereof, the stoppers 76 receive the arms 89 so as to hold the catcher box B in state of slanting rearwardly.

In such a condition that the catcher box B is slanted rearwardly, the roller 94 provided on the utmost end of the arm 89 pushes the cam 10a of the opening and closing lever 10 by rotation of the arm 89, whereby pulling the interlocking wire 71 joined with the opening and closing lever 10. Thus, the catcher box B can be automatically opened simultaneously with lifting thereof without operation of the opening and closing lever 10.

As shown in Fig. 12, a distance L between a front end of the releasing opening of the catcher box B and the rear end surfaces of the main frames 1 can be long because the catcher box B can be slanted rearwardly.

The slanting angle of the catcher box B is allowed to be changed by enabling the positions of the stoppers 76 to be adjusted. Also, whereas the guide plates 51 attached to the slide rails 2 slantingly project from the notches 1a while they are moved upwardly according to the above mentioned construction, the rear surfaces of the main frames 1 can be used as stoppers for the slide rails 2 without the notches 1a and the stoppers 76 when the slanting angle thereof is set to be small.

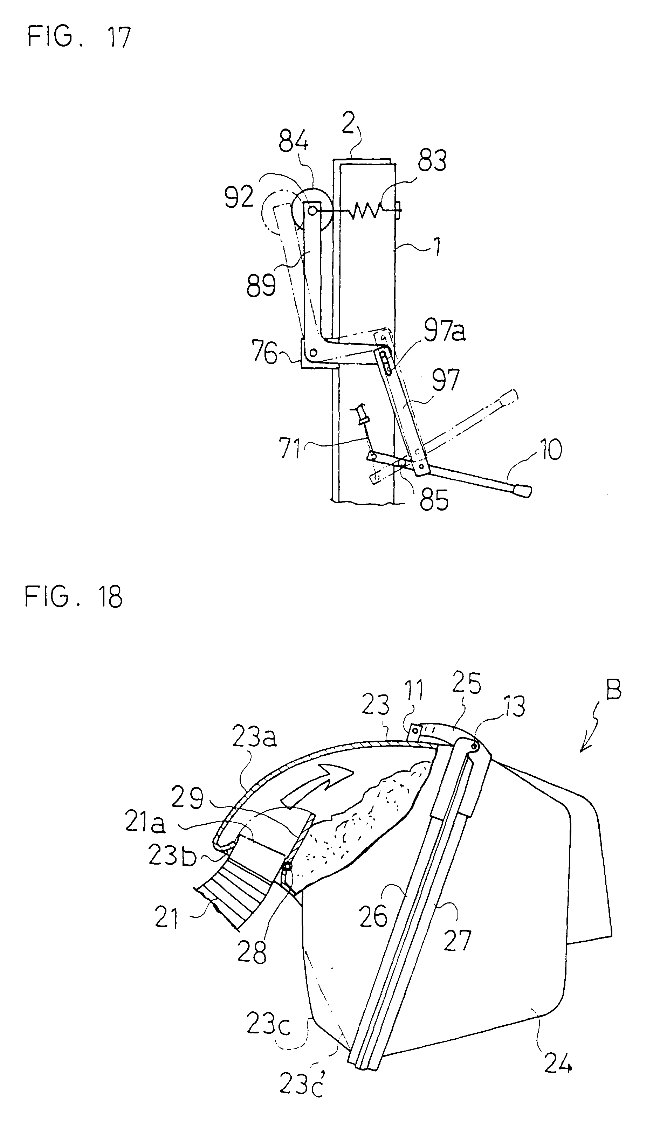

Furthermore, as shown in Fig. 17, for another of such a construction that the catcher box B can be opened simultaneously with being moved upwardly without the operation of the opening and closing lever 10, the utmost end of the arm 89 may be slidably inserted into an oval hole 97a formed at one end of a connecting rod 97, instead of the roller 94 pivoted onto the utmost end of the arm 89. In this case, the other end of the connecting rod 97 is pivotally connected with the opening and closing lever 10. The opening and closing lever 10 is pivoted onto the main frame 1 and the interlocking wire 71 is connected with an end of the opening and closing lever 10.

Thus, the catcher box B can be opened at any level of vertical motion thereof by rotational operation of the opening and closing lever 10 and when the catcher box B reaches the top level, it can be automatically opened by rotation of the arms 89 which rotates the opening and closing lever 10 similarly with the former construction.

As the above mentioned, since the slide rails 2 is slanted rearwardly while the catcher box B is moved upwardly, the releasing opening of the catcher box B is rearwardly apart from the main frames 1 when releasing the cut grass from the vertically moved catcher box B, whereby easing disposal of the catcher box B for releasing the cut grass to a bed of a truck or the like. Thus, the cut grass can be released onto the vicinity of the center of the bed, whereby omitting the leveling work of the cut grass. Furthermore, the main frames 1 or the like can be prevented from abutting against the bed.

Also, since the catcher box B can open simultaneously with reaching the top level of the vertical motion thereof, the operation of the opening and closing lever 10 is not required, so that the releasing work of the cut grass can be done efficiently and shortly.

The catcher box B can be opened by the rotational operation of the opening and closing lever 10 at any other level of the vertical motion thereof than the top level.

Next, explanation will be given on a figure of the catcher box B and a construction of connecting portion thereof for being connected with the connecting hose 21.

The catcher box B is provided with a casting portion 23a expanded forwardly in triangle when viewed in side at an upper right front portion of the front box 23 thereof. An inserting hole 23b opening at the lower surface of the casting portion 23a is disposed so that a rear end portion 21a of the connecting hose 21 can be inserted thereinto.

The inserting hole 23b of the front box 23 is funnel-like shaped so that the rear end portion 21a of the connecting hose 21 can be inserted thereinto even if the rear end 21a has moved from the original position thereof when the connecting hose 21 is connected with the catcher box B which has been lowered after releasing the cut grass.

A pivotal shaft 28 is provided on an lower inner side of the inserting hole 23b of the catcher box B and a lid 29 is pivoted around the pivotal shaft 28. The pivotal shaft 28 is provided therearound with an elastic member like a twisted spring (not shown), which biases the lid 29 in closing direction thereof.

Accordingly, when the catcher box B is moved upwardly, the connecting hose 21 is removed from the inserting hole 23b of the front box 23 and the lid 29 closes the inserting hole 23b, whereby preventing the cut grass within the catcher box B from flowing out.

When the catcher box B is lowered, the rear end portion 21a of the connecting hose 21 is inserted into the inserting hole 23b of the front box 23 and rotates the lid 29 upwardly so as to open the inserting hole 23b. Thus, the connecting hose 21 can be communicated with the interior of the catcher box B without a hand.

The cut grass, which has been mowed by the mower M, is blown from the thrower A into the catcher box B through the connecting hose 21. When being cast into the catcher box B, the cut grass is guided along an upper surface of the casting portion 23a of the catcher box B.

According to such a construction, the rear portion 21a of the connecting hose 21 can be connected with the casting portion 23a of the front box 23 of the catcher box B steadily, in comparison with a construction for connection between the connecting hose 21 and the catcher box B such that a vertically half-divided shaped engaging member is provided on the rear end portion of the connecting hose 21 so as to engage with the casting portion projecting from an inserting hole provided in a front surface of the front box 23 when the lifted catcher box B is lowered as shown in Fig. 7.

Since the casting portion 23a of the front box 23 is formed in a forwardly expanded triangle shape when viewed in side, the space above the casting portion 23a within the catcher box B can be used effectively.

Also, a lower portion of the front box 23 is expanded so as to form a quantity increasing portion 23c. In case that the catcher box B is moved only in vertical direction as shown in Fig. 7, a lower surface 23c' of the front box 23 is slanted at an angle wider than a reposed angle at which the cut grass falls down by empty weight. According to the construction as shown in Fig. 12 wherein the catcher box B can be slanted rearwardly when being moved upwardly, the reposed angle can be so narrowed as the angle of the slanted catcher box B.

Since the deposed angle can be narrowed as such, the lower portion of the catcher box B can be expanded, so that the quantity increasing portion 23c at the lower portion of the front box 23, whereby enabling the volume of content thereof to be increased. Also, the cut grass collected on the lower surface of the casting portion 23a of the front box 23 can fall because of the rearward slanting of the slide rails 2 so as to be released completely.

As the above mentioned, since the rear end portion 21a of the connecting hose 21 is upwardly open and the catcher box B is forwardly expanded at the upper front portion thereof so as to form the casting portion 23a provided at its lower surface with the inserting hole 23b for insertion of the connecting hose 21, the rear end portion 21a of the connecting hose 21 can be easily detached and separated from the casting portion 23a of the front box 23 of the catcher box B when the catcher box B is moved upwardly, and the rear end portion 21a can enter the inserting hole 23b so as to communicate with the interior of the catcher box B when the catcher box B is lowered. The casting portion 23a is so forwardly expanded as to enable the volume of content of the catcher box B to be increased without worsening the balance of weight.

### Possibility of the Industrial Utilization

The construction of the catcher box of the present invention is compact and can be lifted comparatively high, so as to be useful in case that it is attached to a small vehicle for construction of a small lawn mower. It can be applied for moving the cut grass to a carrier and the like and for a work machine such constructed as to lift a bucket or a fork.

## Claims

1. A construction of a catcher box (B) for collection of grass, which has been cut by a mower and blown thereto with transferring wind comprising:
a main frame (1) adapted to be provided upright on a rear portion of a vehicle body;
a slide rail (2) vertically movably fitted on said main frame (1) ;
a lifting frame (3) vertically movably fitted on said slide rail (2) for fixing said catcher box (B);
a first wire (7), which is connected at one end thereof to an upper portion of said main frame (1) and at the other end thereof to a hoist provided on a lower portion of said main frame (1) through a pulley (50) provided on said slide rail (2), and
a second wire (8), which is fixed at one end thereof to said main frame (1) and is clamped at the other end thereof onto said lifting frame (3) through a pulley (49) provided on an upper portion of said slide rail (2), wherein driving of said hoist enables vertically moving said slide rail (2) and said catcher box (B).

2. The construction of a catcher box (B) as set forth in claim 1, further comprising:
a motor (65) adapted to be disposed at a rear end portion of a vehicle body frame (F), between left and right rear wheels (31) and before rear ends of said rear wheels (31) when viewed in side, for the purpose of driving said hoist to wind up said first wire (7).

3. The construction of a catcher box (B) as set forth in claim 1 or 2, further comprising:
a support frame (70), on which a front portion of said catcher box (B) is disposed, detachably attached to said lifting frame (3);
an engaging shaft (58) disposed an a lower portion of said lifting frame (3);
a metal lock member (82) disposed on an upper portion of said lifting frame (1);
an anchoring channel (78a) disposed on a lower portion of said support frame (70) for engagement with said engaging shaft (58); and
an anchoring shaft (79) disposed on an upper portion of said support frame (70) for engagement with said metal lock member (82), wherein by upwardly rotating said catcher box (B) in state of said engaging shaft (58) held in said anchoring channel (78a), said anchoring shaft (79) engages with said metal lock member (82), thereby enabling said catcher box (B) to be fixed to said lifting frame (3).

4. The construction of a catcher box (B) as set forth in claim 1, 2 or 3, further comprising:
an elastic member (83) provided on an upper portion of said main frame (1) for forwardly biasing said slide rail (2); and
a rearwardly movable upper guide roller (84) provided on said upper portion of said main frame (1), wherein said slide rail (2) is adapted to slant rearwardly while said catcher box (B) is moved upwardly.

5. The construction of a catcher box (B) as set forth in claim 4, further comprising:
an arm (89) pivoted on said main frame (1) and rotatably supporting said upper guide roller (84); and
a lever (10) for opening and closing said catcher box (B), said lever (10) being interlocked with said arm (89) so that said catcher box (B) opens simultaneously with reaching the top level of its vertical movement.

6. The construction of a catcher box (B) as set forth in any one of claims 1 to 5, further comprising:
a connecting hose (21) through which grass that has been cut by a mower is blown into said catcher box (B) by a thrower, wherein a rear end (21a) of said connecting hose (21) is open upwardly and an upper front portion of said catcher box (B) is exposed forwardly so as to constitute a casting portion (23a) and a lower surface of said casting portion (23a) is bored by an inserting hole (23b) for insertion of said connecting hose (21).

## Patentansprüche

1. Aufbau eines Auffangkastens (B) zum Sammeln von Gras, das von einem Mähwerk geschnitten wurde und mit Gebläseströmung zu diesem geblasen wurde, mit:
einem Hauptrahmen (1), der aufrecht an einem hinteren Abschnitt eines Fahrzeugkörpers vorgesehen werden kann,
einer Gleitschiene (2), die vertikal bewegbar an bzw. auf dem Hauptrahmen (1) aufgesetzt ist,
einem Heberahmen (3), der vertikal bewegbar an bzw. auf die Gleitschiene (2) zur Befestigung des Auffangkasten (B) aufgesetzt ist,
einem ersten Draht bzw. Seil (7), der/das an einem seiner Enden mit einem oberen Abschnitt des Hauptrahmens (1) und an seinem anderen Ende mit einem Hebezeug verbunden ist, das an einem unteren Abschnitt des Hauptrahmens (1) vorgesehen ist, über eine an der Gleitschiene (2) vorgesehene Seilscheibe (50), und
einem zweiten Draht bzw. Seil (8), der/das an einem seiner Enden am Hauptrahmen (1) befestigt ist und an seinem anderen Ende an dem Heberahmen (3) festgeklemmt ist, über eine an dem oberen Abschnitt der Gleitschiene (2) vorgesehene Seilscheibe (49), wobei ein Antreiben des Hebezeugs eine vertikale Bewegung der Gleitschiene (2) und des Auffangkastens (B) ermöglicht.

2. Aufbau eines Auffangkastens (B) nach Anspruch 1, ferner mit:
einem Motor (65), der an einem hinteren Endabschnitt eines Fahrzeugkörperrahmens (F) zwischen linken und rechten Hinterrädern (31) und vor hinteren Enden der Hinterräder (31), von der Seite betrachtet, zum Zweck des Antreibens des Hebezeugs, um den/das erste(n) Draht bzw. Seil (7) aufzuwickeln, angeordnet zu werden vermag.

3. Aufbau eines Auffangkastens (B) nach Anspruch 1 oder 2, ferner mit:
einem Halterungsrahmen (70), an dem ein vorderer Abschnitt des Auffangkastens (B) angeordnet ist und der abnehmbar an dem Heberahmen (3) angebracht ist,
einer Eingriffsachse (58), die an einem unteren Abschnitt des Heberahmens (3) angeordnet ist,
einem Metall-Verriegelungselement (82), das an einem oberen Abschnitt des Heberahmens (1) angeordnet ist,
einem Verankerungskanal (78a), der an einem unteren Abschnitt des Halterungsrahmens (70) zum Eingriff mit der Eingriffsachse (58) angeordnet ist, und
einer Verankerungsachse (79), die an einem oberen Abschnitt des Halterungsrahmens (70) zum Eingriff mit dem Metall-Verriegelungselement (82) angeordnet ist, wobei durch Aufwärtsdrehen des Auffangkastens (B) in dem Zustand, in dem die Eingriffsachse (58) in dem Verankerungskanal (78a) gehalten ist, die Verankerungsachse (79) mit dem Metall-Verriegelungselement (82) in Eingriff kommt, wodurch eine Befestigung des Auffangkastens (B) an dem Heberahmen (3) möglich ist.

4. Aufbau eines Auffangkastens (B) nach Anspruch 1, 2 oder 3, ferner mit:
einem elastischen Element (83), das an einem oberen Abschnitt des Hauptrahmens (1) zum Vorbelasten der Gleitschiene (2) nach vorne vorgesehen ist, und
einer rückwärts bewegbaren oberen Führungsrolle (84), die an dem oberen Abschnitt des Hauptrahmens (1) vorgesehen ist, wobei sich die Gleitschiene (2) nach hinten schrägzustellen vermag, während der Auffangkasten (B) nach oben bewegt wird.

5. Aufbau eines Auffangkastens (B) nach Anspruch 4, ferner mit:
einem an dem Hauptrahmen (1) gelenkig angebrachten Arm (89), der die obere Führungsrolle (84) drehbar haltert, und
einem Hebel (10) zum Öffnen und Schließen des Auffangkastens (B), wobei der Hebel (10) mit dem Arm (89) so verriegelt ist, dass sich der Auffangkasten (B) gleichzeitig mit dem Erreichen des oberen Niveaus seiner Vertikalbewegung öffnet.

6. Aufbau eines Auffangkastens (B) nach einem der Ansprüche 1 bis 5, ferner mit:
einem Verbindungsschlauch (21), durch den Gras, das von einem Mähwerk geschnitten wurde, durch ein Auswurfelement in den Auffangkasten (B) geblasen wird, wobei ein hinteres Ende (21a) des Verbindungsschlauchs (21) nach oben geöffnet ist und ein oberer vorderer Abschnitt des Auffangkastens (B) nach vorne frei liegt, um so einen Auswurfabschnitt (23a) zu bilden, und in eine untere Oberfläche des Auswurfabschnitts (23a) ein Einsetzloch (23b) zum Einsetzen des Verbindungsschlauchs (21) gebohrt ist.

## Revendications

1. Structure d'un panier à herbe (B) destiné à recueillir de l'herbe qui a été coupée par une tondeuse et soufflée dans celui-ci par un courant d'air de transfert, comprenant :
un châssis principal (1) adapté pour être disposé à la verticale sur une partie arrière d'un corps de véhicule ;
un rail de coulissement (2) à déplacement vertical monté sur ledit châssis principal (1) ;
un châssis de levage (3) à déplacement vertical monté sur ledit rail de coulissement (2) afin de fixer ledit panier à herbe (B) ;
un premier câble (7), qui est connecté à une extrémité de celui-ci à une partie supérieure dudit châssis principal (1) et à l'autre extrémité de celui-ci à un appareil de levage disposé sur une partie inférieure dudit châssis principal (1) par l'intermédiaire d'une poulie (50) disposée sur ledit rail de coulissement (2), et
un second câble (8), qui est fixé à une extrémité de celui-ci sur ledit châssis principal (1) et qui est fixé à l'autre extrémité de celui-ci sur ledit châssis de levage (3) par l'intermédiaire d'une poulie (49) disposée sur une partie supérieure dudit rail de coulissement (2), dans lequel l'entraînement dudit appareil de levage permet un déplacement vertical dudit rail de coulissement (2) et dudit panier à herbe (B).

2. Structure d'un panier à herbe selon la revendication 1, comprenant en outre :
un moteur (65) adapté pour être disposé sur une partie d'extrémité arrière d'un châssis de véhicule (F), entre les roues arrière gauche et droite (31) et en avant des extrémités arrière desdites roues arrière (31) lorsqu'elles sont vues de côté, dans le but d'entraîner ledit appareil de levage afin qu'il enroule ledit premier câble (7).

3. Structure d'un panier à herbe (B) selon la revendication 1 ou la revendication 2, comprenant en outre :
un châssis de support (70), sur lequel est disposée une partie avant dudit panier à herbe (B), fixé de manière amovible sur ledit châssis de levage (3) ;
un arbre d'engagement (58) disposé sur une partie inférieure dudit châssis de levage (3) ;
un élément métallique de verrouillage (82) disposé sur une partie supérieure dudit châssis de levage (3) ;
un canal d'ancrage (78a) disposé sur une partie inférieure dudit châssis de support (70), afin de s'engager avec ledit arbre d'engagement (58) ; et
un arbre d'ancrage (79) disposé sur une partie supérieure dudit châssis de support (70), afin qu'il s'engage avec ledit élément métallique de verrouillage (82), dans lequel en tournant vers le haut ledit panier à herbe (B) dans un état où ledit arbre d'engagement (58) est maintenu dans ledit canal d'ancrage (78a), ledit arbre d'ancrage (79) s'engage avec ledit élément métallique de verrouillage (82), ce qui permet au dit panier à herbe (B) de rester fixe sur ledit châssis de levage (3).

4. Structure d'un panier à herbe (B) selon les revendications 1, 2 ou 3, comprenant en outre :
un élément élastique (83) disposé sur une partie supérieure dudit châssis principal (1) destiné à décentrer vers l'avant ledit rail de coulissement (2) ; et
un rouleau de guidage supérieur mobile vers l'arrière (84) disposé sur ladite partie supérieure dudit châssis principal (1), dans lequel ledit rail de coulissement (2) est adapté de manière à s'incliner vers l'arrière alors que ledit panier à herbe (B) est déplacé vers le haut.

5. Structure d'un panier à herbe (B) selon la revendication 4, comprenant en outre :
un bras (89) en pivotement sur ledit châssis principal (1) et supportant en rotation ledit rouleau de guidage supérieur (84) ; et
un levier (10) destiné à ouvrir et à fermer ledit panier à herbe (B), ledit levier (10) étant en connexion avec ledit bras (89), de sorte que ledit panier à herbe (B) s'ouvre simultanément lorsqu'il atteint le niveau supérieur de son déplacement vertical.

6. Structure d'un panier à herbe (B) selon l'une quelconque des revendications 1 à 5, comprenant en outre :
un tuyau de connexion (21) au travers duquel l'herbe qui a été coupée par la tondeuse est soufflée à l'intérieur dudit panier à herbe (B) à l'aide d'un dispositif de projection, dans lequel une extrémité arrière (21a) dudit tuyau de connexion (21) s'ouvre vers le haut et une partie supérieure avant dudit panier à herbe (B) est ouverte vers l'avant de manière à constituer une partie d'écoulement (23a) et une surface inférieure de ladite partie d'écoulement (23a) est percée par un alésage d'introduction (23b) afin de permettre l'introduction dudit tuyau de connexion (21).
